Europäisches Patentamt

**European Patent Office** (11) Publication number: **0 047 598**

Office européen des brevets A1

(19)

(12) **EUROPEAN PATENT APPLICATION**

(21) Application number: **81303812.2** (51) Int. Cl.³: **F 16 D 13/68**

(22) Date of filing: **20.08.81**

(30) Priority: **04.09.80 GB 8028658**

(71) Applicant: **Laycock Engineering Limited, Archer Road, Millhouses Sheffield S8 0JY (GB)**

(43) Date of publication of application: **17.03.82 Bulletin 82/11**

(72) Inventor: **Kettell, John, 5, Marston Close, Dronfield Woodhouse Sheffield S18 5RX (GB)**

(74) Representative: **Dodd, Graham Marshall et al, Guest Keen & Nettlefolds Ltd. Group Patents and Licensing Department Group Head Office P.O. Box 55, Smethwick Warley West Midlands B66 2RZ (GB)**

(84) Designated Contracting States: **DE FR GB IT SE**

(54) **Friction clutch driven plate.**

(57) A friction clutch driven plate incorporates a hub member 11 and a friction disc carrier 14 between which there is arranged a torsional vibration damper. The torsional vibration damper takes the form of springs 26 arranged in windows 23, 24 in the friction disc carrier and 25 in the hub member together with a friction washer 27. The friction washer results in continuous frictional resistance to relative movement between the hub member and friction disc carrier while the springs provide resilient resistance to such angular movement. The springs and windows are arranged to provide some lost motion during which the springs are ineffective and the friction device alone controls relative movement. This arrangement is particularly useful for damping out idler gear rattle in front wheel drive vehicles.

80.063/GMD     Friction Clutch Driven Plate

The invention relates to friction clutch driven plates and particularly to torsional vibration damping means incorporated in such driven plates.

A conventional friction clutch driven plate comprises a hub carrier, a friction disc carrier movable angularly with respect to the hub member and a torsional vibration damping means interconnecting the hub member and the friction disc carrier. The torsional vibration damping means normally comprises resilient means such as a number of coil springs arranged in openings in the hub member and friction disc carrier in such a way as to provide an increased torque reaction with increasing angular movement in either direction between the hub member and friction disc carrier. It is also normal to provide a friction means as part of the torsional vibration damper to provide frictional resistance to relative movement between the hub member and friction disc carrier.

The torsional vibrations to be damped out include those associated with sudden applications of torque as a throttle controlling an engine associated with the clutch is opened or closed suddenly. For this purpose, angular movement between the two parts of the driven plate should take place for values of torque in excess of the maximum torque output of the engine. The stiffness of the resilient means needed to cope with such large torques is unsuitable for damping out low torque torsional vibrations such as the phenomenon known as idler gear rattle.

Idler gear rattle occurs with front wheel drive vehicles which have at least one idler gear interconnecting a gear on the engine output shaft with another gear on the clutch input shaft. There is a tendency, when the engine is idling, that is simply driving the idler gear, clutch and gearbox input shaft, for rapid torque reversals to occur in this part of the vehicle transmission due to irregularities in the rotation of the engine.

There have been several attempts in the past to solve the problem of idler gear rattle by introducing variations on the conventional torsional vibration damper in a clutch driven plate but these proposals have normally incorporated the complication of an additional low torque torsional vibration damper and have met with limited success.

It has also been proposed, in British Patent 1202294, that the hub of a clutch friction disc can incorporate a small amount of torsional free play, with negligible friction damping, so as not to transmit small alternating vibrations which lead to gear rattle under idling conditions. However, it is difficult with the arrangement disclosed to control accurately the amount of free play available, and the hub of the friction disc is complex and bulky.

It is an object of the invention to provide an improved clutch driven plate in which the problem of idler gear rattle can be overcome or reduced.

According to the present invention a friction clutch driven plate comprising a hub member, a friction disc carrier movable angularly with respect to the hub and a torsional vibration damping means interconnecting the hub member and the friction disc carrier, with the torsional vibration damping means comprising resilient means providing an increasing torque reaction with increasing angular movement in either direction in parallel with a friction means providing frictional resistance to relative movement, the resilient means comprising resilient elements arranged in openings in the hub member and the friction disc carrier, is characterised by the fact that all the openings in one of the members are longer than the resilient elements to provide a central range of movement over which the resilient means is ineffective.

It has been found that such an arrangement is both simple in structure and particularly effective in controlling or eliminating idler gear rattle.

Preferably the central range of movement over which the resilient means is ineffective is less than 30% of the total range of possible movement between the hub member and the friction disc carrier.

Preferably the friction torque is between 1% and 10% of the torque required to produce the maximum possible movement between the hub member and the friction disc carrier.

An embodiment of the invention will now be described with reference to the accompanying drawings in which:

Figure 1 is an end elevation of a friction clutch driven plate according to the present invention;

Figure 2 is a section on line II-II of Figure 1; and

Figure 3 is a graph showing the torque-angular displacement characteristic of the driven plate.

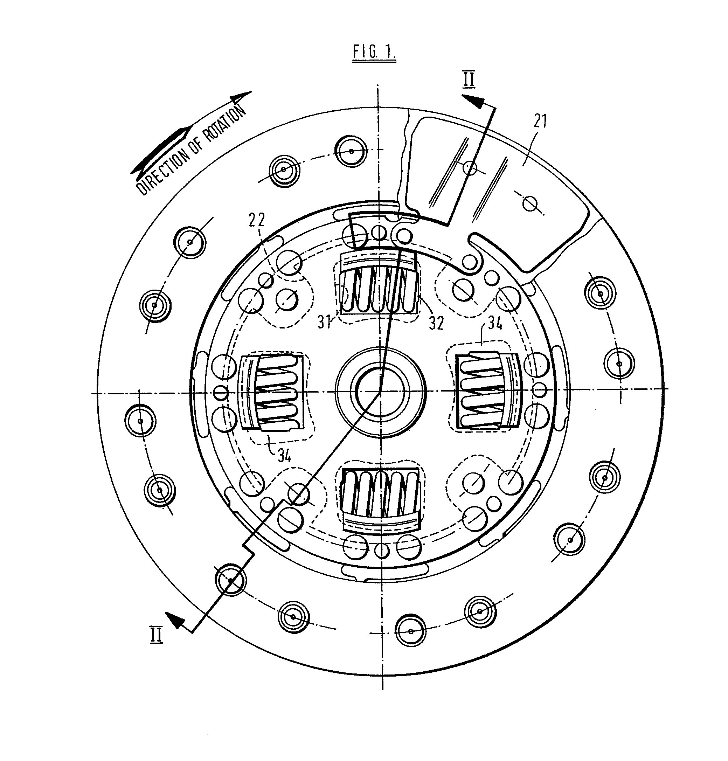

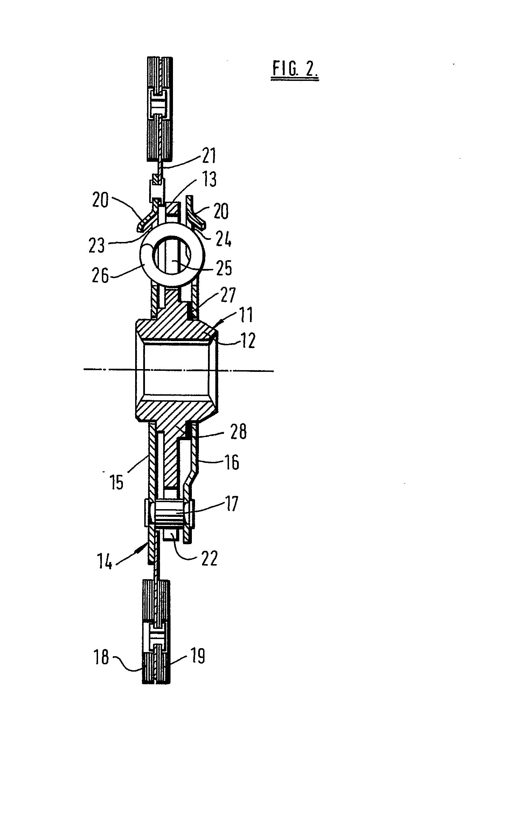

The friction clutch driven plate shown in Figure 1 and Figure 2 incorporates a hub member 11 which has a conventional splined hub 12 and an integral flange 13. The other primary part of the driven plate is a friction disc carrier 14 which comprises two side plates 15 and 16 which are arranged one to each side of the flange 13 and are united and spaced from each other by shouldered rivets 17. Two friction facings 18 and 19 are secured to the side plate 17 by means of support segments 21 which are rivetted to the side plate 15 and to the friction facings. In practice, the

4

support segments 21 are made of spring steel and deformed from a flat condition to provide axial cushioning between the two friction facings as they are clamped together during take up of drive through the clutch but such cushioning is not described in detail as it forms no part of the present invention.

The two side plates 15 and 16 incorporate central apertures by means of which they are guided to be angularly movable with respect to the hub member 11 but are constrained against other movements with respect to the hub member. The maximum extent of this angular movement is limited by the shouldered rivets 17 which are engaged in peripheral openings 22 in the flange 13 of the hub member. The total angular movement available is restricted to something of the order of $15^{\circ}$ by the circumferential dimension of the peripheral openings 22.

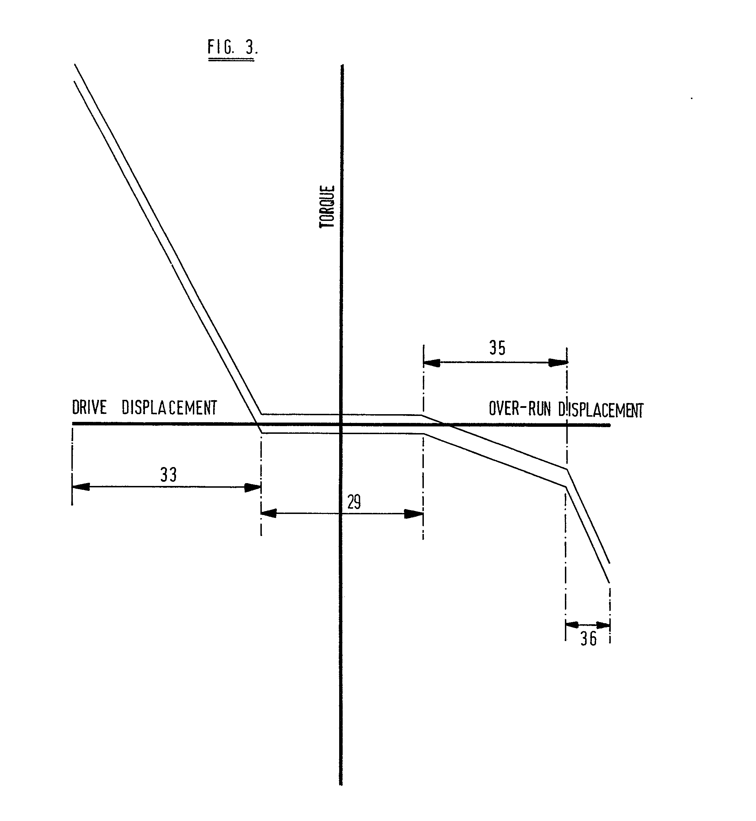

The flange 13 and each of the side plates 15, 16 are provided with openings or windows such as 23 and 24 in the side plates 15 and 16 and 25 in the flange 13. Four windows are provided in each flange and side plate to provide four groups of approximately coincident windows such as the group 23, 24, 25. A resilient means constituted by a coil spring such as 26 is incorporated in each group of windows. The windows in the side plates incorporate guides 26 to hold the springs in position. The arrangement of each group of windows and its associated spring is such as to cause the spring to be compressed between one end face of the window in the flange 13 and the opposite end faces of the windows in the side plates 15 and 16. Thus the springs provide a resilient torque reaction between the hub member and the friction disc carrier as one of these members is rotated with respect to the other. The arrangement of the windows is such that these are not exactly coincident and the variation from exact coincidence varies from one group to another and by this means the springs are arranged to become operative at different stages during relative angular movement between the hub member and the friction disc carrier. This arrangement of windows, contributes to the shape of the torque-angular displacement characteristic which is illustrated in Figure 3 and will be described more fully subsequently.

The driven plate also incorporates friction means constituted primarily by a friction washer 27 interposed between the side plate 16 and a shoulder 28 at the base of the flange 13. The spacing of the side plates 15 and 16, which is controlled by the rivets 17, the thickness of the friction washer 27 and the thickness of the shoulder 28 are such that a friction grip is established through the friction washer between the shoulder 28 on hub member 11 and the side plates 15 and 16 constituting part of the friction disc carrier. The friction washer 27 may be formed from a fibrous material selected to give appropriate friction characteristics. The effect of the friction between the hub member and the friction disc carrier is to provide a substantially constant frictional resistance to relative rotation which, combined with the effect of the springs such as 26 in their windows, results in the characteristic shown in Figure 3.

A basic feature of the invention is the provision of a range of movement 29 in Figure 3, in this example amounting to about 4°, over which the springs such as 26 are completely ineffective so that the relative movement is controlled solely by the friction. Over this range, the characteristic of Figure 3 is represented by two horizontal straight lines, displaced from the origin through equal distances representative of the friction torque associated with the friction means. Referring to Figure 1, this range 29 of angular movement without involving the springs is achieved due to the fact that there is a clearance, in the central position shown, between each end of the window in the flange 13 and the spring as it is retained by the windows in the side plates 15 and 16. Such a clearance, representing approx-

imately 2$^o$ in either direction, is shown at 31 and 32 in Figure 1. In the drive direction, namely the direction in which the engine is applying torque through the clutch driven plate, all four springs come into operation at approximately the same point in angular displacement, so over range 33 in the drive direction, the characteristic is a straight inclined line, or taking the friction into account, two slightly spaced parallel lines representative respectively of torque being applied against the friction force and torque being released with the friction force direction reversed. In the over-run direction of torque application to the driven plate, namely when the engine is acting as a brake and is being driven through the clutch, the springs come into operation at different stages due to the increased clearance 34 between the ends of two of the springs and the associated windows in the flange 13. The effect of this, is that the torque in the over-run direction comes on in two stages represented in Figure 3 by two ranges 35 and 36 of differing slopes. Two stage or multi-stage characteristics of this kind, achieved by various window arrangements are well known in themselves for both the drive and over-run directions. The distinctive feature of the clutch shown in Figures 1 and 2 and of the characteristic shown in Figure 3 is the range of movement 29 which is controlled solely by friction and not by the spring force. The characteristic shown in Figure 3 has been represented in an idealised form with sharp transitions from one range to another, but in practice due to various inherent flexibilities in the driven plate, the transitions from one range to another tend to be more gradual as would be represented by curved transitions on the characteric. However, the idealised characteric is a useful simplification for the purposes of explanation.

The total amount of movement 29 would be selected to suit the particular vehicle in which the clutch is to be installed, and may be greater than 4$^o$, e.g. about 7$^o$. It has been found that the amount of movement 29 is important, and requires to be accurately controlled in manufacture.

7

In practice, with the clutch driven plate installed in a front wheel drive vehicle incorporating a driven train having an idler gear, the fact that the hub member 11 and friction disc carrier 14 can move relative to each other purely under the influence of the comparatively low friction torque, tends to damp out any idler gear rattle which might otherwise occur. The angular movement over which the springs remain ineffective and the value of the friction torque required to produce effective reduction or elimination of idler gear rattle will vary from application to application but in general, the angular movement over which the springs remain ineffective should preferably be less than 30% of the total range of possible movement between the hub member and friction disc carrier. Also, the friction torque should preferably lie between 1% and 10% of the torque required to produce the maximum possible movement between the hub member and the friction disc carrier.

CLAIMS

1. A friction clutch driven plate comprising a hub member, a friction disc carrier movable angularly with respect to the hub member and a torsional vibration damping means interconnecting the hub member and friction disc carrier, the torsional vibration damping means comprising resilient means providing an increasing torque reaction with increasing angular movement in either direction in parallel with a friction means providing frictional resistance to relative movement, the resilient means comprising resilient elements arranged in openings in the hub member and the friction disc carrier, characterised by the fact that all the openings in one of the members are longer than the resilient elements to provide a central range of movement over which the resilient means is ineffective.

2. A friction clutch driven plate as claimed in Claim 1 further characterised in that the central range of movement over which the resilient means is ineffective is less than 30% of the total range of possible movement between the hub member and friction disc carrier.

3. A friction clutch driven plate as claimed in Claim 1 or Claim 2 further characterised in that the friction torque is between 1% and 10% of the torque required to provide the maximum possible movement between the hub member and friction disc carrier.

4. A friction clutch driven plate as claimed in any preceding claim, further characterised in that the central range of movement over which the resilient means is ineffective is in the angular range $4^{\circ} - 7^{\circ}$.

1|3

FIG. 1.

0047598

FIG. 2.

FIG. 3.

TORQUE

DRIVE DISPLACEMENT

OVER-RUN DISPLACEMENT

35

33

29

36

**European Patent Office**

**EUROPEAN SEARCH REPORT**

Application number

EP 81 30 3812

## DOCUMENTS CONSIDERED TO BE RELEVANT

| Category | Citation of document with indication, where appropriate, of relevant passages | Relevant to claim |
|---|---|---|
| X | GB - A - 1 139 907 (BORG-WARNER)<br>* Page 4, lines 45-60; page 4, lines 84-105, especially lines 93-98; figures 6,7 * | 1,2 |
| X | US - A - 3 138 011 (STROMBERG)<br>* Column 1, lines 47-53; column 3, lines 1-8; figure 3 * | 1 |
| APE | GB - A - 2 042 680 (FICHTEL)<br>* Page 2, lines 83-88; figure 1 * | |
| A | US - A - 3 863 747 (WERNER) | |
| A | DE - A - 1 600 055 (FERODO) | |
| A | FR - A - 1 525 291 (FERODO) | |
| A | FR - A - 2 246 767 (DAIMLER) | |
| A | FR - A - 2 418 380 (AUTOMOTIVE) | |
| A | FR - A - 1 574 332 (LUK) | |
| A | & GB - A - 1 202 294 | |

**CLASSIFICATION OF THE APPLICATION (Int. Cl.³)**

F 16 D 13/58

**TECHNICAL FIELDS SEARCHED (Int. Cl.³)**

F 16 D
F 16 F

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 27-11-1981 | ORTHLIEB |

EPO Form 1503.1  06.78